# EUROPEAN PATENT APPLICATION

(11) **EP 4 586 079 A1**
(43) Date of publication of application: **16.07.2025**
(21) Application number: 25150701.8
(22) Date of filing: 08.01.2025
(51) Int. Cl.: G06F 8/65, G06F 11/14, G06F 11/30

(54) **SYNCHRONIZED ACTIVATION OF FIRMWARE ON A DISTRIBUTED COMPUTING SYSTEM**

(30) Priority: 12.01.2024 US 202418411571
(71) Applicant: Microsoft Technology Licensing, LLC, Redmond, WA 98052 (US)
(72) Inventor: KOTARY, KARUNAKARA, Redmond, Washington (US); RAMAMURTHY, VENKATESH, Redmond, Washington (US); GARG, ANKUR, Redmond, Washington (US); GURUMOORTHY, NAGASUBRAMANIAN, Redmond, Washington (US)
(74) Representative: CMS Cameron McKenna Nabarro Olswang LLP

(57) **Abstract**

Provided are systems and methods for implementing a time-synchronized firmware activation system in distributed computing environments. A data center orchestrator connected to one or more distributed computer nodes prepares a firmware payload with an updated version of firmware and an activation time value indicating a time the updated version of firmware is to be activated. The firmware payload is then transferred to the distributed computer nodes as part of the deployment process. The updated version of firmware is installed on each of the distributed computer nodes receiving the firmware payload as part of the update process by installing the updated version of the firmware on the devices within each distributed computer node. The updated version of firmware version is then activated synchronously across the devices of the distributed computer nodes based on the activation time value as part of the activation process.

## Description

### BACKGROUND

Traditionally, the firmware of devices implemented in nodes of distributed computing systems is updated by transmitting the firmware to the nodes at a first time and allowing each node to separately install the firmware on the device implemented on the node whenever each device is available for installation. This method of firmware installation often results in the nodes being collectively unavailable for prolonged periods or not resolving collective performance issues of nodes of a distributed computing system. Also, devices upon which the firmware is not successfully implemented may become unusable and the nodes including the devices may experience degraded performance until the firmware installation is resolved.

It is with respect to these and other general considerations that the aspects disclosed herein have been made. Also, although relatively specific problems may be described, it should be understood that the examples should not be limited to solving the specific problems identified in the background or elsewhere in this disclosure.

### SUMMARY

Examples of the present disclosure describe systems and methods for implementing a time-synchronized firmware activation system in distributed computing environments.

In a distributed computing system, the system clock of one or more distributed computer nodes connected using a network is synchronized with a network clock of a network time management server. An example disclosed system uses a data center orchestrator connected to one or more distributed computer nodes over the network to perform firmware updates on the computer nodes. The data center orchestrator prepares a firmware payload with an updated version of firmware and an activation time value indicating a time the updated version of firmware is to be activated for usage on the distributed computer nodes. The firmware payload is then transferred to the distributed computer nodes as part of the deployment process.

The updated version of firmware is installed on each of the distributed computer nodes receiving the firmware payload as part of the update process by installing the updated version of the firmware on the devices within each distributed computer node. The updated version of firmware version is then activated synchronously across the devices of the distributed computer nodes based on the activation time value as part of the activation process.

This summary is provided to introduce a selection of concepts in a simplified form that are further described below in the Detailed Description. This Summary is not intended to identify key features or essential features of the claimed subject matter, nor is it intended to be used to limit the scope of the claimed subject matter. Additional aspects, features, and/or advantages of examples will be set forth in part in the description which follows and, in part, will be apparent from the description, or may be learned by practice of the disclosure.

### BRIEF DESCRIPTION OF THE DRAWINGS

Examples are described with reference to the following Figures.
FIG. 1 illustrates a block diagram of an example system for time-synchronized firmware activation.
FIG. 2 is a block diagram of an example computer node with devices to receive updated firmware.
FIG. 3 is a flow diagram of the interaction between the data center orchestrator and components of the computer node of FIG. 2.
FIG. 4 depicts an example method for time-based firmware activation on distributed computer nodes.
FIG. 5 depicts an example method for managing firmware activation on distributed computer nodes.
FIG. 6 is a block diagram illustrating an example of the physical components of a computing device for practicing aspects of the disclosure.

### DETAILED DESCRIPTION

Distributed computing systems with multiple computer nodes handle firmware updates independently at each computer node. Each computer node updates the firmware of devices within the computer node when the computer node is available for a firmware update. Also, even when all the computer nodes are available simultaneously, the computer nodes can have different network connections and processing speeds, causing the receipt of deployed firmware updates and completion of installation at different times. This results in each node receiving an updated version of firmware at a different time and the computer node being unavailable while updating firmware. Further, any failure in the deployment or installation of firmware causes the computer node to be unavailable. A solution to this issue is to separate deployment from installation of firmware. The proposed solution allows the computer node to receive the deployed update while executing the assigned workload. Still, the firmware must be installed and activated when each computer node is available.

Additionally, firmware installation is time-consuming, and computer nodes are unavailable for prolonged periods while installing the firmware on devices in the computer nodes. Such situations cause the computer nodes to be unavailable unexpectedly for prolonged periods while the firmware is installed and activated for a device to access the installed firmware. When a computer node waits for the workload to be completed for an installation to begin, the firmware installation of each node may be completed at different times. By installing and activating firmware on computer nodes at different times, some of the computer nodes may not be available simultaneously for a workload or may be unsuitable for running a workload due to different firmware versions on each computer node. Furthermore, in a distributed computing system, the performance of networked computer nodes is based on the computer node with the slowest performance. Updating the performance-related firmware on the computer nodes individually to improve the performance of the distributed computing system may still perform poorly due to a slowest performing computer node.

In light of the above-described challenges with firmware installation, there is a need to separate deployment, installation, and activation of firmware. Additionally, it is preferable to activate firmware for use by firmware devices, such as performance-related firmware, simultaneously on all computer nodes in a distributed computing system to avoid any computer node slowing down the overall performance of the distributed computing system. Also, it is preferable that the downtime caused by the firmware installation is minimized in order to ensure that all computer nodes of a distributed computing system are available simultaneously. Disclosed herein are systems that separate firmware update (deployment and installation) and firmware activation on a node. Disclosed distributed computer nodes determine the time for synchronous activation using the activation time value in the received firmware payload. The distributed computer nodes compare their respective clocks linked to a network clock to the activation time value. The link between the clock on each node and the network clock ensures all the distributed computer nodes have the same time and synchronously match the activation time value. Upon determining a match, all the nodes simultaneously activate the firmware on each node.

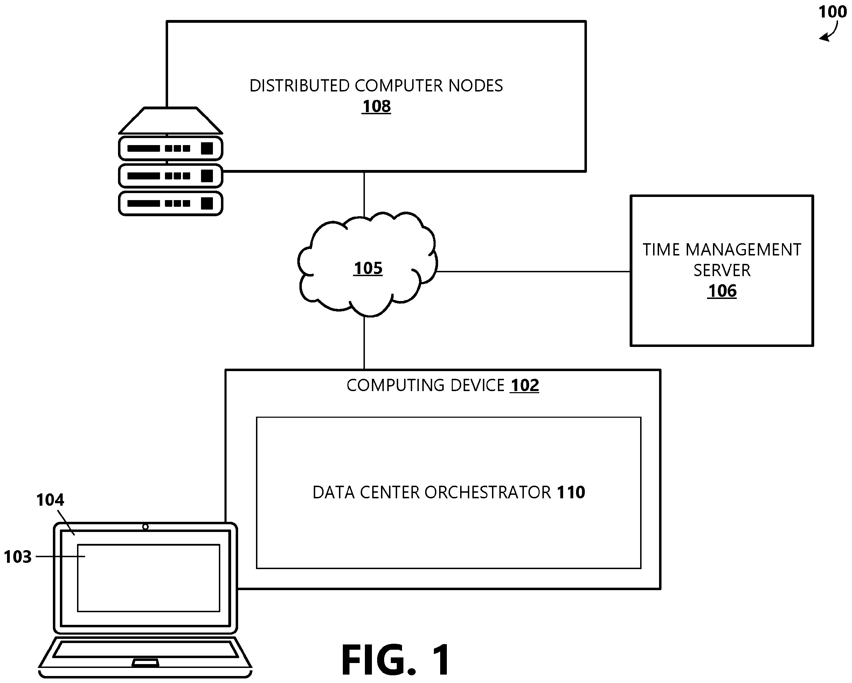

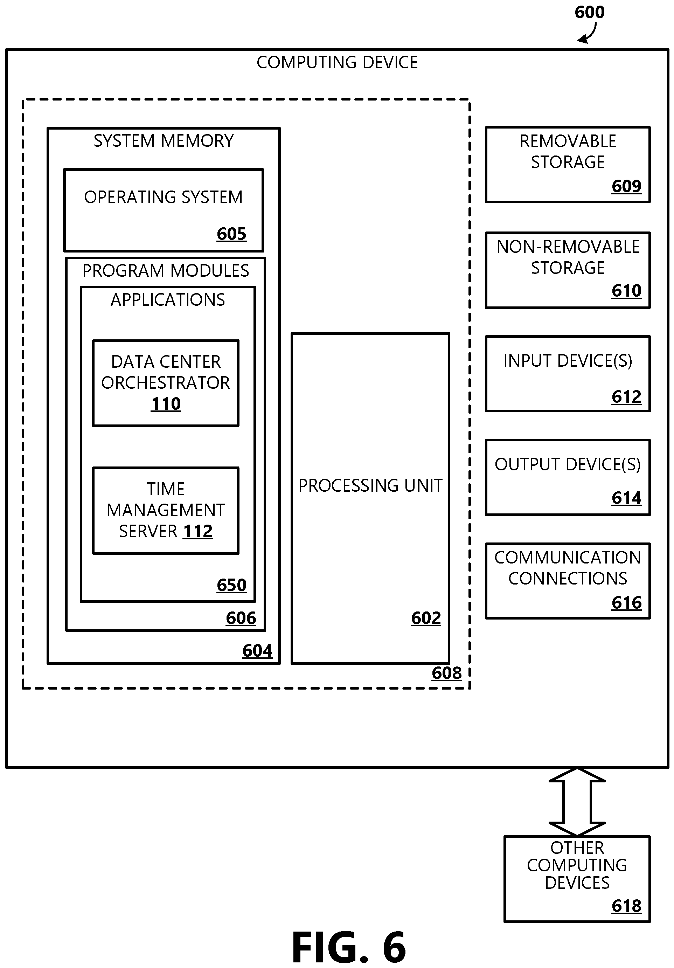

FIG. 1 is a block diagram of a time-synchronized firmware activation system 100. The example system 100, as depicted, is a combination of interdependent components that interact to form an integrated whole. Some components of system 100 are illustrative of software applications, systems, or modules that operate on a computing device or across a plurality of computer devices. Any suitable computer device(s) may be used, including web servers, application servers, network appliances, dedicated computer hardware devices, virtual server devices, personal computers, a system-on-a-chip (SOC), or any combination of these and/or other computing devices known in the art. In one example, components of systems disclosed herein are implemented on a single processing device. The processing device may provide an operating environment for software components to execute and utilize resources or facilities of such a system. An example of processing device(s) comprising such an operating environment is depicted in FIG. 6. In another example, the components of systems disclosed herein are distributed across multiple processing devices.

In Figure 1, system 100 comprises computing device 102, application ills 103, display screen 104, network 105, time management server 106, distributed computer nodes 108, and data center orchestrator 110. Although system 100 is depicted as comprising a particular combination of computing devices and components, the scale and structure of devices and components described herein may vary and may include additional or fewer components than those described in Figure 1. Further, although examples in Figure 1 and subsequent figures will be described in the context of firmware updates and distributed computing nodes, the examples are equally applicable to other contexts. For instance, one or more of the examples are also applicable to other types of software updates or deployments, and to centralized computing examples (e.g., computing environments in which the computing nodes are in the same geographic location).

As illustrated in FIG. 1, example system 100 includes a computing device 102 to aid in updating distributed computer nodes 108 with a new firmware version. Distributed computer nodes 108 may implemented in a data center (or another computing environment) running a distributed workload. In some examples, computing device 102 and distributed computer nodes 108 are implemented in the same data center. In one such example, computing device 102 is one of the distributed computer nodes 108 and is given the additional duty of managing the firmware update process on the distributed computer nodes 108. In other examples, computing device 102 and distributed computer nodes 108 are implemented in separate computing environments and/or geographic locations that are accessible via network 105. Network 105 represents one or more networks (e.g., a private area network (PAN), a local area network (LAN), and a wide area network (WAN)).

Computing device 102 includes data center orchestrator 110. Data center orchestrator 110 prepares a payload to update firmware of devices on distributed computer nodes 108. Data center orchestrator 110 includes firmware code and an activation time value in the payload. The firmware code may include a new or updated version of firmware. Data center orchestrator 110 may receive firmware code from a user of computing device 102. Alternatively, data center orchestrator 110 may receive or retrieve the firmware code from a separate service, computing device, or computing system. For instance, the firmware code may be retrieved from a software code repository (not illustrated) that is accessible locally or remotely by data center orchestrator 110. In one instance, the firmware code is retrieved from the software code repository as part of a periodic check for software updates for distributed computer nodes 108. Similar to the firmware code, the activation time value may be received from a user of computing device 102 or from a separate service, computing device, or computing system. The activation time value represents a date and/or time value. In some examples, the activation time value is a specific date/time value (e.g., December 25, 2023 at 1:00 PM ET). In other examples, the activation time value is a relative date/time value (e.g., four hours after the last distributed computer node 108 to receive the firmware code confirms receipt of the firmware code).

Data center orchestrator 110 implements one or more application LIs 103, which may be presented via a display screen 104. Application ills 103 provide functionality enabling a user request to, for example, update firmware on distributed computer nodes 108, view results of updating firmware, or request rollbacks (e.g., to revert) to previous versions of firmware. For example, an application UI 103 may enable a user to specify a storage location of firmware code to be used in a firmware update, specify one or more of distributed computer nodes 108 to which the firmware update will be applied, specify a activation time value, specify a rollback scenario (e.g., the firmware update fails for a certain number or percentage of distributed computer nodes 108), or specify a remedial action (e.g., immediately revert all distributed computer nodes 108 to a previous firmware version, inactivate distributed computer nodes 108 that did not experience a successful firmware update, point network traffic for distributed computer nodes 108 to an alternative cluster of distributed computer nodes 108).

As depicted in FIG. 1, time management server 106 is a network time server accessible by distributed computer nodes 108 over network 105. Time management server 106 synchronizes the system clocks ("clocks") of each node of distributed computer nodes 108. As one example, time management server 106 uses a time protocol, such as Network Time Protocol (NTP), to synchronize all distributed computer nodes 108 to within a few milliseconds of Coordinated Universal Time (UTC). In such an example, the time protocol uses an intersection algorithm (e.g., a version of Marzullo's algorithm) to select accurate time servers to mitigate the effects of variable network latency. Time management server 106 synchronizes the clocks of distributed computer nodes 108 to ensure firmware of distributed computer nodes 108 is updated in a synchronized manner at a specific time.

Time management server 106 may also be connected to computing device 102 over network 105. In some embodiments, time management server 106 is a timer software running on computing device 102 and synchronizing with clocks on distributed computer nodes 108. In some examples, data center orchestrator 110 may communicate with the time management server 106 when setting an activation time value included as part of the firmware payload. Data center orchestrator 110 may use the current time provided by time management server 106 and add the maximum amount of time needed to install the updated version of firmware on distributed computer nodes 108 to generate activation time value to include in firmware payload.

Distributed computer nodes 108 may be a set of physical computer nodes connected to each other over a high-speed network, such as network 105. In some examples, distributed computer nodes 108 are implemented in a cloud-based environment or server-based environment using one or more cloud resources, such as server devices (e.g., web servers, file servers, application servers, database servers), personal computers (PCs), virtual devices, and mobile devices. The hardware of the cloud resources may be distributed across disparate regions in different geographic locations.

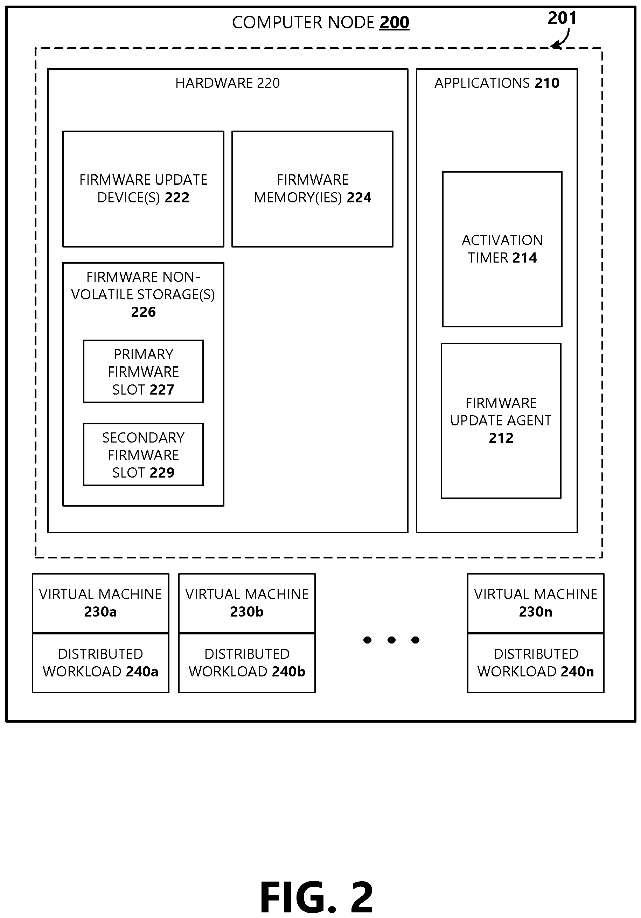

In some examples, distributed computer nodes 108 may have different computing and storage capabilities and may include different devices needing firmware updates. Distributed computer nodes 108 may communicate with data center orchestrator 110 to receive firmware to update devices on each node in distributed computer nodes 108. Distributed computer nodes 108 may submit requests to data center orchestrator 110 for devices that need to be updated. Distributed computer nodes 108 may submit a request at regular intervals for all devices. Data center orchestrator 110 may transmit firmware payload when all nodes in distributed computer nodes have requested to update the firmware. These and other examples of distributed computer nodes 108 behavior are described below in further detail with reference to FIG. 2.

FIG. 2 is a block diagram of an example computer node 200 with devices to receive an updated version of firmware. Computer node 200 may be part of a distributed computer nodes 108 (as shown in FIG. 1). As illustrated in FIG. 2, computer node 200 includes system 201 and a set of virtual machines 230a to 230n running in computer node 200 using system 201. Virtual machines 230a to 230n run multiple distributed computing loads 240a to 240n. One or more of distributed computing load of distributed computing loads 240a to 240n may run on virtual machines 230a to 230n at different times. System 201 includes software 210 used to update the firmware of devices present in hardware 220. Hardware 220 additionally includes locations to store and install firmware.

Software 210 includes firmware update agent 212, which receives firmware payloads for updating the firmware in firmware update device(s) 222. Firmware update agent 212 processes the received firmware payloads to send the updated version of firmware to hardware 220 and an activation time value to activation timer 214. Activation timer 214 manages the clock on computer node 200 by communicating with the time management server 106 (as shown in FIG. 1). Firmware update agent 212 communicates with data center orchestrator 110 (as shown in FIG. 1) to request and receive firmware updates and share results of installing the updated version of firmware on firmware update device(s) 222. Firmware update agent 212 parses the firmware payload received at computer node 200 over network 105 (as shown in FIG. 1) to extract the updated version of firmware and activation time values. Firmware update agent 212 provides the activation time value to activation timer 214 and provides the updated version of firmware to hardware 220 for installation on firmware update device(s) 222. In some examples, firmware update agent 212 copies the updated version of firmware to firmware non-volatile storage(s) 226 as part of installing the updated version of firmware on firmware update device(s) 222.

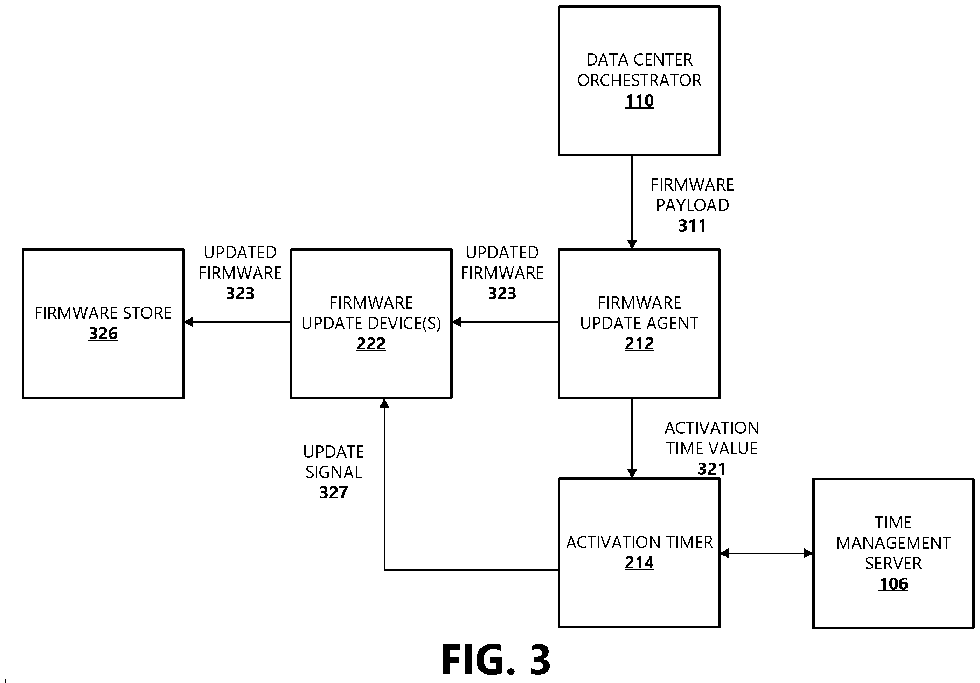

Firmware update agent 212 monitors for new firmware payloads from data center orchestrator 110. In some examples, firmware update agent 212 includes a queue for storing received firmware update requests. The firmware update requests may be processed in the order each update request was received, or a different processing strategy may be used. The queue may include firmware updates to multiple devices in firmware update device(s) 222. In some examples, firmware update agent 212 updates the firmware of multiple devices simultaneously. A further description of firmware updates to multiple devices is described in detail in the FIG. 3 description below.

Activation timer 214 is a software application managing a network linked clock of computer node 200. Activation timer 214 compares the activation time value received from firmware update agent 212 to the network linked clock to determine if the firmware update can be activated on computer node 200. Activation timer 214 regularly syncs the network linked clock to time management server 106. Activation timer 214 communicates with firmware update agent 212 when the activation time value matches the current time in the network linked clock. Firmware update agent 212 and/or activation timer 214 may activate or cause components of hardware 220 to activate installed firmware updates on firmware update device(s) 222.

As illustrated in FIG. 2, hardware 220 includes firmware update device(s) 222, firmware memory(ies) 224, and firmware non-volatile storage(s) 226. Firmware update device(s) 222 may represent a variety of firmware devices used by computer node 200. For example, a firmware device in firmware update device(s) 222 is a Basic Input Output System (BIOS) device that is used to boot-up and load software of computer node 200. Other devices in firmware update device(s) can include devices linked to graphics cards and other hardware of computer node 200.

In examples, firmware update device(s) 222 are executed using the latest version of the firmware they consumed (e.g., the latest version of the firmware installed on firmware update device(s) 222) by accessing it from a storage, such as firmware non-volatile storage(s) 226. In some examples, firmware update device(s) 222 may consume the latest update from firmware non-volatile storage(s) 226. As illustrated in FIG. 2, firmware non-volatile storage(s) 226 may be partitioned into a first partition portion storing the current version of the firmware (e.g., the currently activated version) and a second partition portion storing the updated version of the firmware (e.g., the to-be activated version). In some examples, firmware update agent 212 copies an updated version of firmware to secondary firmware slot 229 (e.g., the second partition portion) as part of the installation of the updated version of firmware. Primary firmware slot 227 (e.g., the first partition portion) may include the current version of firmware consumed by the firmware update device(s) 222. In some examples, activation timer 214, upon determining that the network linked clock on computer node 200 matches the activation timer value, may request to copy the updated version of firmware in secondary firmware slot 229 to primary firmware slot 227. Copying the updated version firmware to primary firmware slot 227 results in the activation of the updated version of firmware for consumption by firmware update device(s) 222. In some examples, copying the updated version of firmware to primary firmware slot 227 also causes the current version of firmware in primary firmware slot 227 to be copied to the secondary firmware slot 229.

FIG. 3 is a flow diagram of the interaction between a data center orchestrator, such as data center orchestrator 110 of FIG. 1 and the components of a computer node, such as the components of the computer node 200 of FIG. 2. Data center orchestrator 110 begins the process of updating the firmware of devices (e.g., firmware update device(s) 222 of FIG. 2) residing at the computer node (e.g., computer node 200 of FIG. 2) by transmitting firmware payload 311 containing the updated version of firmware to firmware update agent 212 for installation and activation the updated version of firmware.

Firmware update agent 212 may receive the firmware payload 311 for processing and updating the firmware of devices in the computer node. Firmware update agent 212 parses firmware payload 311 to identify the activation time value 321 and updated firmware 323. Firmware update agent 212 transmits the activation time value 321 to activation timer 214 to ensure the latest version of firmware is consumed by a device (e.g., firmware update device(s) 222 of FIG. 2) on the computer node when the current time of the computer node reaches the activation time value 321. Firmware update agent 212 transmits updated firmware 323 to firmware update device(s) 222 to ensure a new or most recent version of firmware code is installed on the device.

In some examples, firmware payload 311 may include updated firmware 323 for multiple firmware update device(s) 222 on the computer node. Firmware update agent 212 may determine the updated firmware 323 corresponding to each firmware update device(s) 222 based on information in an update request, text in the firmware code, information in an update schedule, or any other means of deriving the identity of corresponding devices. In other examples, firmware payload 311 indicates the corresponding firmware update device(s) 222 for each updated version of firmware. For instance, firmware payload 311 may include firmware code sections that are delineated by device name or are otherwise tagged with device identifying information.

Firmware update agent 212 may sequentially update each firmware update device(s) 222 with the corresponding updated version of firmware. For instance, each updated firmware 323 may be associated with a different activation time value 321 (e.g., the activation time values 321 are each 30 minutes apart) or each updated firmware 323 may be contingent on the occurrence of event (e.g., the successful installation of a software dependency of updated firmware 323). Alternatively, firmware update agent 212 may update firmware update device(s) 222 simultaneously or while other firmware updates are ongoing. For instance, each updated firmware 323 may be associated with the same activation time value 321 or with an activation time value 321 that overlaps the activation time value 321 of a different firmware update device(s) 222.

Firmware update device(s) 222 or firmware update agent 320 forwards the received updated firmware 323 to firmware store 326. Firmware update device(s) 222 may transmit updated firmware 323 to firmware store 326. In some examples, updated firmware 323 is additionally processed by firmware update device(s) 222. For example, firmware update device(s) 222 processes the updated firmware 323 to modify the data types or other data structures.

Activation timer 214 communicates with time management server 106 to confirm that the current time (e.g., clock) on a computer node containing activation timer 214 is the same as the current time on time management server 106. Activation timer 214 also monitors the current time on the computer node to determine when the current time matches the activation time value 321. When the current time is determined to match the activation time value 321, activation timer 214 sends an update signal 327 to firmware update device(s) 222 to activate and consume updated firmware 323.

Having described a system that may be employed by the aspects disclosed herein, this disclosure will now describe methods that may be performed by various aspects of the disclosure. In aspects, methods 400-500 may be executed by a system, such as system 100 of Figure 1. For instance, a computing device (such as a server or cloud computing device) may include at least one processor and memory storing instructions that, when executed, cause the operations of methods 400-500 to be performed. However, methods 400-500 are not limited to such examples.

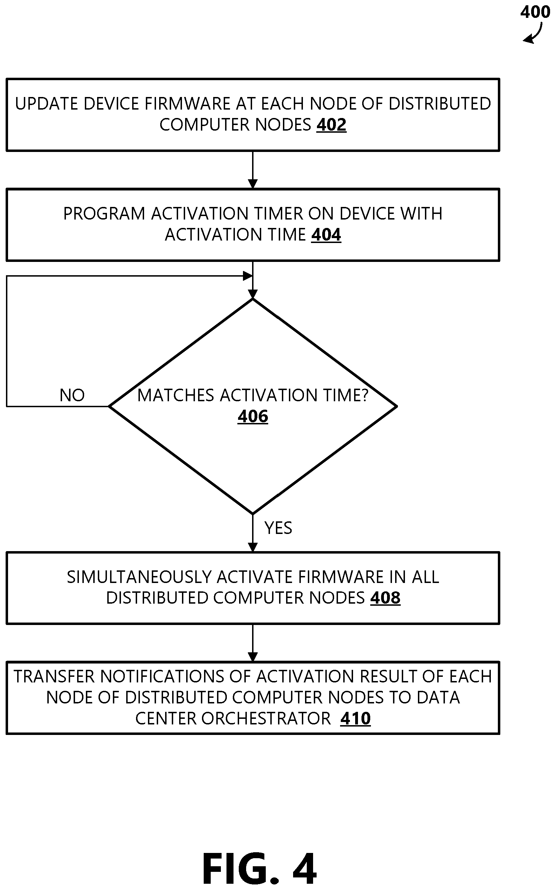

FIG. 4 depicts an example method for time-based firmware activation on distributed computer nodes.

At operation 402, devices (e.g., firmware update device(s) 222 of FIG. 2) on a node (e.g., computer node 200 of FIG. 2) in distributed computer nodes (e.g., distributed computer nodes 108 of FIG. 1) are updated by installing an updated version of firmware (e.g., updated firmware 323 of FIG. 3) received in a firmware payload. In examples, a firmware update agent (e.g., firmware update agent 212 of FIG. 2) of a node receives the firmware payload from an orchestration component (e.g., data center orchestrator 110). The updated version of firmware is installed by copying the updated version of firmware code to a location accessible to devices consuming firmware. For example, the updated version of firmware, such as updated firmware 323 (as shown in FIG. 3), is copied to firmware store 326 (as shown in FIG. 3). In examples, firmware store 326 is partitioned into a first partition portion storing the current version of the firmware (e.g., the currently activated version) and a second partition portion storing the updated version of the firmware (e.g., the to-be activated version). Devices consuming a previous version of firmware may not be aware of the updated version of the firmware until the updated version of the firmware is activated for consumption.

At operation 404, an activation timer (e.g., activation timer 214 of FIG. 3) of the computer node is programmed with the activation time value (e.g., activation time value 321 of FIG. 3) included in the firmware payload. For example, the firmware update agent provides the activation time value to the activation timer, which stores the activation time value. The activation time value may include, or the firmware update agent may also provide, information for the device (e.g., firmware update device(s) 222 of FIG. 2) corresponding to the activation time value. For instance, the activation time value may be provided to the activation timer along with an identifier (e.g., device name, device model, device serial number, device IP address). The activation time value may be stored by the activation timer such that the activation time value is associated with (e.g., assigned to or mapped to) the device. Upon programming the activation timer with the activation time value, the clock of the computer node is synchronized with a network clock (e.g., time management server 106 of FIG. 1).

At operation 406, the activation timer determines whether the activation time value matches the current time on the computer node. If it is determined that the activation time value does not match the current time on the computer node, the activation timer continues to monitor the current time on the computer node at operation 406. However, if it is determined that the activation time value matches the current time on the computer node, the activation timer, method 400 proceeds to operation 408.

At operation 408, the activation timer simultaneously (or near simultaneously) activates updated version of firmware for one or more devices on the computer node. The activation timer may also simultaneously (or near simultaneously) activate the updated version of firmware for devices on the distributed computer nodes associated with the computer node. In examples, the updated version of firmware is activated by changing the pointer (e.g., an object storing a memory address) of the current version of the firmware code associated with the updated version of firmware to point to the storage location of the updated version of firmware code. By changing the pointer to the location of the updated version of firmware, the previous version of firmware may be reinstalled to a device quickly and simply in the event that a firmware upgrade is unsuccessful. For instance, instead of being required to redeploy the previous version of firmware to the computer node, as would be required if the current (e.g., previous) version of firmware had been deleted from the computer node, the current version of firmware can be reactivated by changing the pointer to point to the storage location of the current version of the firmware code. In some examples, in response to an unsuccessful firmware activation of a device, one or more of the devices of the distributed computer nodes continues to use the current version of the firmware.

At operation 410, the firmware update agent transfers notifications of the result of activating firmware in operation 408 to the orchestrator component. For example, the firmware update agent reviews the firmware activation results from each node and combines the results into a combined result. The notifications may include information related to the attempted installation and activation of the updated version of firmware (e.g., an installation/activation result, the activation time/data, an amount of time taken to install/activate the updated version of firmware, a storage location of the updated version of firmware and/or the current version of firmware). In examples, one or more verification processes, such as stability tests, may be executed to confirm the successful activation of firmware. Stability tests may include unit tests to confirm that a device installed with the updated version of firmware is working as expected or as intended. In some examples, stability tests may include security checks and/or test the performance and quality of test results.

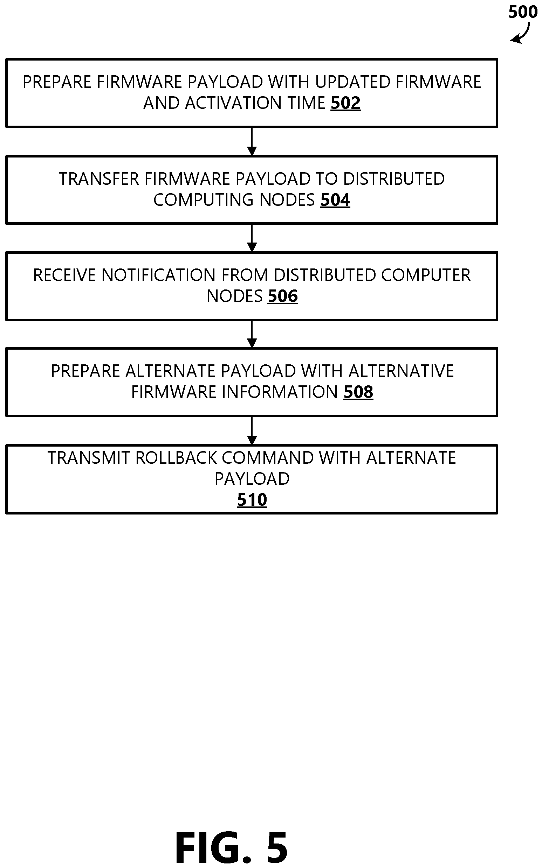

Data center orchestrator 110 may review the activation results of the firmware activation to determine whether to send a rollback command to the devices. Rolling back firmware on failure to activate is described in further detail in the description of FIG. 5.

FIG. 5 depicts an example method for managing firmware activation on distributed computer nodes.

At operation 502, a firmware payload (e.g., firmware payload 311 of FIG. 3) for updating the firmware of a device (e.g., firmware update device(s) 222 of FIG. 2) is prepared. For instance, an orchestration component (e.g., data center orchestrator 110) may prepare a firmware payload for transmission to a set of computer nodes (e.g., distributed computer nodes 108 of FIG. 1) each comprising one or more devices. In examples, the firmware payload includes the updated version of firmware (e.g., updated firmware 323 of FIG. 3) and an activation time value (e.g., activation time value 321 of FIG. 3) identifying the time to activate the updated version of firmware. Alternatively, the updated version of firmware may be provided in a first payload that is transmitted at a first time and the activation time value may be provided in a second payload that is transmitted at a second time. In some examples, the activation time value is received from a user of a computing device (e.g., computing device 102). For instance, the orchestration component may provide an interface (e.g., application UI 103) that enables a user to provide the activation time value via a display (e.g., display screen 104) of the computing device. The orchestration component then includes the activation time value in the firmware payload. In other examples, the orchestration component determines the activation time value based on the time taken to install previous firmware versions on the set of computer nodes, the number of nodes in the set of computing nodes, and/or the network speed of a network (e.g., network 105) used to deploy, update, and/or activate the updated version of firmware on the set of computing nodes.

At operation 504, the orchestration component transfers the firmware payload to each node in the set of computing nodes. A firmware agent of the computer node (e.g., firmware update agent 212) parses the firmware payload to identify the updated version of firmware and the activation time value. The updated version of firmware is stored in a storage location of each node, such as firmware non-volatile storage(s) 226 of FIG. 2. In examples, the storage location is partitioned into at least a first partition portion that stores current version(s) of the firmware (e.g., primary firmware slot 227) and a second partition portion that stores the updated version(s) of firmware (e.g., secondary firmware slot 229). The activation time value is provided to an activation timer (e.g., activation timer 214) that records the activation time value. The activation timer may also be provided an indication of one or more devices associated with the activation time value (e.g., devices to which the firmware update will be applied). The activation timer synchronizes the clock of the computer node with a network clock (e.g., time management server 106 of FIG. 1), which ensure that the clocks of each node in the set of computing nodes are synchronized. Upon detecting that the clock of a node matches the activation time value, the update firmware is activated on the corresponding devices of the set of computing nodes.

At operation 506, a notification is received from the set of computer nodes with information about the result of activating the updated version of firmware transferred as part of the firmware payload in operation 504. For example, the firmware agent of each node may monitor the firmware activation process to determine whether the updated version of firmware was successfully activated on each corresponding device. The notifications may include information related to the attempted installation and/or activation of the updated version of firmware. The firmware agent of each node transfers the notifications to the orchestration component. The orchestration component may aggregate the notifications and/or perform one or more verification processes using the notifications to confirm that devices installed with the updated version of firmware are working as expected or as intended.

At operation 508, data center orchestrator 110 prepares an alternate payload with alternate firmware information based on the notification received in operation 506. The orchestration component reviews the notifications to determine success or failure of activating firmware on devices in each computer node of the set of computer nodes. Upon determining that one or more devices on one or more computer nodes failed to activate the most recent version of firmware transmitted in operation 502, the orchestration component may prepare an alternate payload with alternate firmware information.

Alternate firmware information for an alternate payload includes information on firmware that was activated successfully before the updated version of firmware was transmitted in operation 502. In some examples, alternate firmware information includes the information about the previous version of firmware that was deactivated on a device to activate the updated version of the firmware transmitted in operation 502.

Alternate firmware information may include a version number of the firmware. In some examples, the alternate firmware information includes the code of the firmware version. In some examples, the orchestration component selects an alternative version of the firmware based on the most recent checkpoint in time with a successful activation of firmware on the set of computer nodes.

At operation 510, the orchestration component transmits a rollback (e.g., revert) command with an alternate payload to the set of computer nodes. In some examples, the rollback command may include the list of computer nodes and devices on which the firmware will be rolled back. The rollback command may skip the computer nodes and devices that failed to install and/or activate the updated version of firmware transferred in operation 502. In some examples, the rollback command may include computer nodes which are no longer working or are not working as expected after installation and/or activation of updated firmware.

FIG. 6 is a block diagram illustrating the physical components (e.g., hardware) of a computing device 600 with which examples of the present disclosure may be practiced. The computing device components described below may be suitable for one or more of the components of the systems described above. In a basic configuration, the computing device 600 includes at least one processing unit 602 and a system memory 604. Depending on the configuration and type of computing device 600, the system memory 604 may comprise volatile storage (e.g., random access memory), non-volatile storage (e.g., read-only memory), flash memory, or any combination of such memories. The system memory 604 may include an operating system 605 and one or more program modules 606 suitable for running software applications 650 (e.g., data center orchestrator 110) and other applications.

The operating system 605 may be suitable for controlling the operation of the computing device 600. Furthermore, aspects of the disclosure may be practiced in conjunction with a graphics library, other operating systems, or any other application program and is not limited to any particular application or system. This basic configuration is illustrated in FIG. 6 by those components within a dashed line 608. The computing device 600 may have additional features or functionality. For example, the computing device 600 may also include additional data storage devices (removable and/or non-removable) such as, for example, magnetic disks, optical disks, or tape. Such additional storage is illustrated in FIG. 6 by a removable storage device 609 and a non-removable storage device 610.

As stated above, a number of program modules and data files may be stored in the system memory 604. While executing on the processing unit 602, the program modules 606 may perform processes including one or more of the stages of methods 400 and 500 illustrated in FIGs. 4-5. Other program modules that may be used in accordance with examples of the present disclosure and may include applications such as search engines and database applications, etc.

Furthermore, examples of the disclosure may be practiced in an electrical circuit comprising discrete electronic elements, packaged or integrated electronic chips containing logic gates, a circuit utilizing a microprocessor, or on a single chip containing electronic elements or microprocessors. For example, examples of the disclosure may be practiced via a system-on-a-chip (SOC) where each or many of the components illustrated in FIG. 6 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to detecting an unstable resource may be operated via application-specific logic integrated with other components of the computing device 600 on the single integrated circuit (chip). Examples of the present disclosure may also be practiced using other technologies capable of performing logical operations such as, for example, AND, OR, and NOT, including mechanical, optical, fluidic, and quantum technologies.

The computing device 600 may also have one or more input device(s) 612 such as a keyboard, a mouse, a pen, a sound input device, a touch input device, a camera, etc. The output device(s) 614 such as a display, speakers, a printer, etc. may also be included. The aforementioned devices are examples and others may be used. The computing device 600 may include one or more communication connections 616 allowing communications with other computing devices 618. Examples of suitable communication connections 616 include RF transmitter, receiver, and/or transceiver circuitry; universal serial bus (USB), parallel, and/or serial ports.

The term computer readable media as used herein includes volatile and nonvolatile, removable and non-removable media implemented in any method or technology for storage of information, such as computer readable instructions, data structures, or program modules. The system memory 604, the removable storage device 609, and the non-removable storage device 610 are all computer readable media examples (e.g., memory storage.) Computer readable media include random access memory (RAM), read-only memory (ROM), electrically erasable programmable ROM (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 600. Any such computer readable media may be part of the computing device 600. Computer readable media does not include a carrier wave or other propagated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, communication media may include wired media such as a wired network or direct-wired connection, and wireless media such as acoustic, RF, infrared, and other wireless media.

In an aspect, the technology relates to a system for synchronized firmware activation on distributed computer nodes. The system includes one or more distributed computer nodes connected using a network, each node of the one or more distributed computer nodes consisting of a clock synchronized with a network time management server, a data center orchestrator connected to the one or more distributed computer nodes over the network, at least one processor, and a memory coupled to the data center orchestrator, the memory consisting of computer executable instructions that, when executed by the data center orchestrator, to perform operations. The operations include: preparing a firmware payload with an updated firmware and an activation time; transferring the firmware payload to the one or more distributed computer nodes to perform operations comprising: updating the firmware at each node of the one or more distributed nodes; determining when the clock in each node of the one or more distributed computer nodes matches the activation time; and in response to the determination, simultaneously activate the firmware on each node of the one or more distributed computer nodes.

In an example, the operations performed by the one or more distributed computer nodes further comprise: transferring to the data center orchestrator, notifications based on whether each node of the one or more distributed nodes activated successfully. In another example, the operations performed by the data center orchestrator further comprise: reviewing the notification from each node of the one or more distributed computer nodes for issues with stability; transmitting a rollback command to roll back firmware on the distributed computer nodes based on the notifications. In still another example, transmitting a rollback command to roll back firmware on the distributed computer nodes based on the received notifications further comprises: preparing a payload with information about an alternative version of firmware and activation time. In a further example, the alternative version of the firmware is selected based on most recent checkpoint in time with a successful activation of firmware on the one or more distributed computer nodes. In yet another example, the information about the alternative version of the firmware includes a version number. In still yet another example, the information about the alternative version of the firmware includes an alternate firmware.

In an example, a node of the one or more distributed computer nodes, on failure to activate, continues to use a previous version of the firmware.

In an example, the activation time is received from a user and included in the firmware payload.

In an example, the data center orchestrator determines the activation time.

In an example, activation time is transferred to the distributed computer nodes as a separate payload from the updated firmware.

In another aspect, the technology related to a computer-implemented method for synchronized firmware activation on distributed computer nodes. The method includes preparing a firmware payload with an updated firmware and an activation time; transferring the firmware payload to one or more distributed computer nodes to perform operations comprising: updating the firmware at each node of the one or more distributed nodes; determining when a clock in each node of the one or more distributed computer nodes matches the activation time; and in response to the determination, performing synchronized activation of the firmware on each node of the one or more distributed computer nodes.

In an example, transferring to a data center orchestrator, notifications based on whether each node of the one or more distributed nodes activated successfully. In another example, reviewing the notification from each node of the one or more distributed computer nodes for issues with stability; transmitting a rollback command to roll back firmware on the distributed computer nodes based on the received notifications. In still another example, transmitting a rollback command to roll back firmware on the distributed computer nodes based on the received notifications further comprises: preparing a payload with information about an alternative version of firmware and activation time. In a further example, the alternative version of the firmware is selected based on most recent checkpoint in time with a successful activation of firmware on the one or more distributed computer nodes.

In an example, a node of the one or more distributed computer nodes, on failure to activate, continues to use a previous version of the firmware.

In an example, the activation time is received from a user and included in the firmware payload.

In an example, the data center orchestrator determines the activation time.

In still another aspect, the technology relates to a system for synchronized firmware activation on distributed computer nodes. The system includes a processor, memory coupled to the processor, and the memory comprising computer-executable instructions that perform operations. The operations include: receiving, by a plurality of computer nodes, a firmware payload comprising an updated firmware and an activation time, wherein each node of the plurality of computer nodes includes a clock synchronized with a time management server; prior to the activation time, updating the plurality of computer nodes using the updated firmware; and in response to determining that the clock in each node of the plurality of distributed computer nodes matches the activation time, performing synchronized activation of the firmware on each node of the plurality of computer nodes at the activation time.

Aspects of the present disclosure, for example, are described above with reference to block diagrams and/or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the broader aspects of the general inventive concept embodied in this application that do not depart from the broader scope of the claimed disclosure.

Furthermore, those skilled in the art will recognize that boundaries between the functionality of the above-described operations are merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

Although the disclosure provides specific examples, various modifications and changes can be made without departing from the scope of the disclosure as set forth in the claims below. Accordingly, the specification and figures are to be regarded in an illustrative rather than a restrictive sense, and all such modifications are intended to be included within the scope of the present disclosure. Any benefits, advantages, or solutions to problems that are described herein with regard to a specific example are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

## Claims

1. A system (100) comprising:
one or more distributed computer nodes (108) connected using a network (105), each node of the one or more distributed computer nodes consisting of a clock synchronized with a network time management server (106);
a data center orchestrator (110) connected to the one or more distributed computer nodes (108) over the network (105);
at least one processor; and
memory coupled to the data center orchestrator (110), the memory consisting of computer executable instructions that, when executed by the data center orchestrator (110), perform operations comprising:
preparing (502) a firmware payload (311) with an updated firmware and an activation time;
transferring (504) the firmware payload (311) to the one or more distributed computer nodes (108) to perform operations comprising:
updating (402) the firmware at each node of the one or more distributed nodes;
determining (406) when the clock in each node of the one or more distributed computer nodes matches the activation time; and
in response to the determination, simultaneously activate (408) the firmware on each node of the one or more distributed computer nodes.

2. The system of claim 1, wherein the operations performed by the one or more distributed computer nodes further comprise:
transferring to the data center orchestrator, notifications based on whether each node of the one or more distributed nodes activated successfully.

3. The system of claim 2, wherein the operations performed by the data center orchestrator further comprise:
reviewing the notification from each node of the one or more distributed computer nodes for issues with stability;
transmitting a rollback command to roll back firmware on the distributed computer nodes based on the notifications.

4. The system of claim 3, wherein transmitting a rollback command to roll back firmware on the distributed computer nodes based on the received notifications further comprises:
preparing a payload with information about an alternative version of firmware and activation time.

5. The system of claim 4, wherein the alternative version of the firmware is selected based on most recent checkpoint in time with a successful activation of firmware on the one or more distributed computer nodes.

6. The system of any of claims 4 or 5, wherein the information about the alternative version of the firmware includes a version number.

7. The system of any of claims 4 to 6, wherein the information about the alternative version of the firmware includes an alternate firmware.

8. The system of any of the preceding claims, wherein a node of the one or more distributed computer nodes, on failure to activate, continues to use a previous version of the firmware.

9. The system of any of the preceding claims, wherein the activation time is received from a user and included in the firmware payload.

10. The system of any of the preceding claims, wherein the data center orchestrator determines the activation time.

11. The system of any of the preceding claims, wherein the activation time is transferred to the distributed computer nodes as a separate payload from the updated firmware.

12. A computer-implemented method for performing synchronized firmware activation, the method comprising:
preparing (502) a firmware payload (311) with an updated firmware and an activation time;
transferring (504) the firmware payload to one or more distributed computer nodes (108) to perform operations comprising:
updating (402) the firmware at each node of the one or more distributed nodes;
determining (406) when a clock in each node of the one or more distributed computer nodes matches the activation time; and
in response to the determination, performing (408) synchronized activation of the firmware on each node of the one or more distributed computer nodes.

13. The method of claim 12, wherein the method further comprises:
transferring to a data center orchestrator, notifications based on whether each node of the one or more distributed nodes activated successfully.

14. The method of claim 13, wherein the method further comprises:
reviewing the notification from each node of the one or more distributed computer nodes for issues with stability;
transmitting a rollback command to roll back firmware on the distributed computer nodes based on the received notifications.

15. The method of claim 14, wherein transmitting a rollback command to roll back firmware on the distributed computer nodes based on the received notifications further comprises:
preparing a payload with information about an alternative version of firmware and activation time.
